# EUROPÄISCHE PATENTSCHRIFT

(11) **EP 2 798 318 B1**
(45) Veröffentlichungstag und Bekanntmachung des Hinweises auf die Patenterteilung: **03.11.2021**
(21) Anmeldenummer: 12798230.4
(22) Anmeldetag: 22.11.2012
(51) Int. Cl.: G01F 23/296

(54) **VORRICHTUNG ZUR BESTIMMUNG UND/ODER ÜBERWACHUNG MINDESTENS EINER PROZESSGRÖßE**
DEVICE FOR DETERMINING AND/OR MONITORING AT LEAST ONE PROCESS VARIABLE
DISPOSITIF POUR DÉTERMINER ET/OU SURVEILLER AU MOINS UNE GRANDEUR DE PROCESSUS

(30) Priorität: 28.12.2011 DE 102011090015
(43) Veröffentlichungstag der Anmeldung: 05.11.2014
(73) Patentinhaber: Endress+Hauser SE+Co. KG, 79689 Maulburg (DE)
(72) Erfinder: MÜLLER, Alexander, 79361 Sasbach-Jechtingen (DE); LOPATIN, Sergej, 79540 Lörrach (DE); BRENGARTNER, Tobias, 79312 Emmendingen (DE)
(74) Vertreter: Andres, Angelika Maria
(86) Internationale Anmeldenummer: PCT/EP2012/073385
(87) Internationale Veröffentlichungsnummer: WO 2013/097991

(56) Entgegenhaltungen:
- EP-A1- 2 151 672
- DE-A1- 4 033 252
- DE-A1- 19 720 519
- DE-A1-102005 062 813
- DE-A1-102008 050 266
- US-A- 3 326 043
- US-A- 4 734 609
- US-A1- 2007 169 549

## Beschreibung

Die vorliegende Erfindung betrifft eine Vorrichtung zur Bestimmung und/oder Überwachung mindestens einer Prozessgröße mit einer mechanisch schwingfähigen Einheit, einer elektrodynamischen Wandlereinheit, welche die schwingfähige Einheit mittels eines Anregungssignals zu mechanischen Schwingungen anregt, und welche von der schwingfähigen Einheit Schwingungen empfängt und in ein elektrisches Empfangssignal umwandelt, und mit einer Elektronikeinheit, welche zumindest aus dem Empfangssignal die Prozessgröße bestimmt und/oder überwacht. Bei der Prozessgröße handelt es sich beispielsweise um den Füllstand, die Dichte, oder die Viskosität eines Mediums in einem Behälter.

Im Stand der Technik sind so genannte Schwinggabeln bekannt, welche zur Überwachung eines Grenzstands einer Flüssigkeit in einem Behälter, oder zu Dichte- oder Viskositätsmessung dienen. Die mechanisch schwingfähige Einheit in Form der Schwinggabel wird von einer elektromechanischen Wandlereinheit zu resonanten mechanischen Schwingungen angeregt. Die elektromechanische Wandlereinheit empfängt die Schwingungen der schwingfähigen Einheit und wandelt sie in ein von den Schwingungseigenschaften abhängiges elektrisches Empfangssignal um, an Hand dessen die Prozessgröße bestimmbar ist. Zur Füllstandsmessung wird beispielsweise detektiert, ob die Schwingfrequenz bei resonanter Anregung unterhalb oder oberhalb einer vorgegebenen Grenzfrequenz liegt. Übersteigt die Schwingfrequenz die Grenzfrequenz, schwingt die schwingfähige Einheit in Luft; unterschreitet die Schwingfrequenz die Grenzfrequenz, ist die schwingfähige Einheit mit Medium bedeckt.

Es sind im Wesentlichen zwei Typen von Wandlereinheit bekannt: piezoelektrische und induktive. Piezoelektrische Wandlereinheiten besitzen entweder ein Piezoelement (z.B. DE 3931453 C1) zum Anregen und Empfangen der Schwingungen oder jeweils mindestens einen Anregepiezo und einem Empfangspiezo (z.B. DE 19720519 A1). Induktive Wandlereinheit weisen in der Regel eine Spule zum Anregen der Schwingungen und eine weitere Spule zum Empfangen der Schwingungen auf. Es ist jedoch auch bekannt, eine Spule zur Anregung der Schwingungen und ein piezoelektrisches Element zum Empfangen der Schwingungen zu verwenden (z.B. DE 4320411 C2).

Bei der so genannten Ein-Piezo-Technologie dient dasselbe Piezoelement als Sender und Empfänger der mechanischen Schwingungen der schwingfähigen Einheit. Zur Beaufschlagung des Piezoelements dient in der Regel eine elektrische Wechselspannung in Form eines Rechtecksignals. Bei der Beaufschlagung eines Piezoelements mit einem solchen Rechtecksignal wird die Piezokapazität jeweils an den Flanken des Rechtecksignals umgepolt. Hierdurch entstehen Lade- und Entladeströme. Zusätzlich fließt ein den mechanischen Bewegungen entsprechender elektrischer Strom. Zur Auswertung der mechanischen Schwingungen wird der resultierende Strom über einen Widerstand in eine Spannung umgewandelt. Die Lade- und Entladeströme stellen bei der Auswertung unerwünschte Störsignale dar.

Ähnliches gilt für eine Spule. Durch die starke Kopplung zwischen Sendesignal und Empfangssignal ist ein auf die Schwingungen der schwingfähigen Einheit zurückzuführendes Nutzsignal nur schwer aus dem Empfangssignal extrahierbar. Deshalb wird bei einem induktiven Antrieb oftmals das Empfangssignal nicht mittels einer Spule, sondern von einem piezoelektrischen Wandlerelement aufgenommen. Die für Piezoelemente erforderliche Kraftkopplung mit der schwingfähigen Einheit führt jedoch beispielsweise bei starken Temperaturschwankungen zu hohen Kräften auf das piezoelektrische Wandlerelement.

Aus der europäischen Patentanmeldung EP 2 151 672 A1 ist ein Verfahren zum Messen eines Füllstands oder Grenzstands bekannt geworden. Als Wandlereinheit kann ein piezoelektrisches Element oder ein induktives Element wie eine Spule eingesetzt werden.

Die Offenlegungsschrift DE 40 33 252 A1 beschreibt ein Verfahren und eine Vorrichtung zur Wegmessung, wobei die Vorrichtung eine Messspule und eine Referenzspule aufweist.

Die Aufgabe der Erfindung besteht darin, eine Vorrichtung eingangs genannter Art mit einer robusten und entkoppelten Antriebs-/Empfangseinheit bereit zu stellen. Die Aufgabe wird bezüglich einer Vorrichtung nach dem Oberbegriff des Hauptanspruchs gelöst durch die Merkmale des kennzeichnenden Teils des Hauptanspruchs. Vorteilhafte Ausgestaltungen sind in den Unteransprüchen angegeben.

Eine erfindungsgemäße Vorrichtung zur Bestimmung und/oder Überwachung mindestens einer Prozessgröße eines Mediums in einem Behälter weist eine mechanisch schwingfähigen Einheit, eine elektrodynamischen Wandlereinheit zum Anregen der schwingfähigen Einheit zu mechanischen Schwingungen mittels eines Anregungssignals und zum Empfangen der mechanischen Schwingungen der schwingfähigen Einheit und Umwandeln in ein elektrisches Empfangssignal, und eine Elektronikeinheit, welche zumindest aus dem Empfangssignal die Prozessgröße bestimmt und/oder überwacht, auf. Die elektrodynamische Wandlereinheit weist hierbei eine Spule auf, welche sowohl als Antriebselement als auch als Empfangselement dient.

Die induktive Wandlereinheit stellt einen effizienten Antrieb ohne Kraftschluss dar. Es wirken daher bei Schlageinwirkung auf die schwingfähige Einheit oder hohen Temperaturschwankungen keine gegebenenfalls zu Beschädigungen führenden Kräfte auf die Wandlereinheit. Die erfindungsgemäße Vorrichtung ist daher sehr robust. Weiterhin ist die Vorrichtung einfach und preiswert herstellbar.

Die erfindungsgemäße Vorrichtung weist ein Referenzelement mit mindestens einer Referenzspule auf, wobei das Referenzelement parallel zu der elektrodynamischen Wandlereinheit geschaltet und mit dem gleichen Anregungssignal beaufschlagt ist, und wobei das Referenzelement ein von den Schwingungen der schwingfähigen Einheit unbeeinflusstes Referenzsignal erzeugt. Die Elektronikeinheit extrahiert aus dem Empfangssignal und dem Referenzsignal ein Nutzsignal und bestimmt und/oder überwacht an Hand des Nutzsignals die Prozessgröße. In dieser vorteilhaften Ausgestaltung weist die Vorrichtung einen Messzweig mit der Wandlereinheit und einen Referenzzweig mit einem Referenzelement auf, wobei von dem Messzweig ein Empfangssignal und von dem Referenzzweig ein Referenzsignal abgreifbar sind. Das Empfangssignal entspricht einer Überlagerung aus einem die Schwingungen wiedergebenden Nutzsignal und einem Störsignal, welches auf Umladeströme bei Polaritätswechsel des Anregungssignals zurückzuführen ist. Das Referenzsignal wird ebenfalls durch Umladeströme hervorgerufen, welche aus dem Polaritätswechsel des Anregungssignals resultieren und enthält keinen schwingungsabhängigen Anteil. Die Umladeströme sind abhängig von der Zeitkonstante des jeweiligen Zweigs. Sind die Zeitkonstante des Messzweigs und des Referenzzweigs identisch, ist das Nutzsignal beispielsweise durch Subtraktion von Referenzsignal und Empfangssignal extrahierbar. Das im Empfangssignal enthaltene Störsignal wird hierbei kompensiert. Hierdurch ist es ermöglicht, mit einer sowohl als Sender als auch als Empfänger dienenden Spule ein schwingungsabhängiges Nutzsignal hoher Güte aufzunehmen, an Hand dessen die Prozessgröße mit hoher Genauigkeit bestimmbar ist.

In einer Ausgestaltung weist das Referenzelement ein erstes Bauelement elektrisch einstellbarer Größe auf, welches elektrisch in Reihe zu der Referenzspule geschaltet ist.

In einer weiteren Ausgestaltung weist die Wandlereinheit ein zweites Bauelement elektrisch einstellbarer Größe auf, welches elektrisch in Reihe zu der Spule geschaltet ist. Vorzugsweise sind erstes und zweites Bauelement baugleich.

Gemäß einer Ausgestaltung handelt es sich bei dem ersten Bauelement und/oder dem zweiten Bauelement um einen einstellbaren Widerstand, insbesondere ein Digitalpotentiometer.

Eine Ausgestaltung sieht vor, dass die Größe des zweiten Bauelements derart einstellbar ist, dass die Wandlereinheit eine vorgebbare Zeitkonstante aufweist.

Gemäß einer Ausgestaltung weist die Elektronikeinheit eine Regel-/Auswerteeinheit auf, welche die Größe des ersten Bauelements auf den Wert regelt, bei dem ein Betrag eines Störsignals in dem aus dem Empfangssignal und dem Referenzsignal extrahierten Nutzsignal minimal ist.

In einer Weiterbildung ist die Regel-/Auswerteeinheit dazu ausgestaltet, an Hand des Störsignals die Temperatur der Spule zu bestimmen.

Eine Weiterbildung beinhaltet, dass ein Temperatursensor vorgesehen ist, welcher die Temperatur am Ort des Referenzelements bestimmt, dass die Regel-/Auswerteeinheit aus dem in dem Nutzsignal enthaltenen Störsignal die Temperaturdifferenz zwischen der Spule und dem Referenzelement bestimmt, und dass die Regel-/Auswerteeinheit an Hand der Temperatur am Ort des Referenzelements und der Temperaturdifferenz die Temperatur der Spule bestimmt.

In einer Ausgestaltung ist vorgesehen, dass die Vorrichtung ein Über- oder Unterschreiten eines vorgegebenen Grenzwertes der Prozessgröße überwacht, dass in der Regel-/Auswerteeinheit für einen vorgegebenen Temperaturbereich, in welchem die Vorrichtung einsetzbar ist, Schwellwerte für eine von der Prozessgröße abhängige Schwingungseigenschaft abgelegt sind, die die Schwingungseigenschaft beim Erreichen des Grenzwertes bei der jeweiligen Temperatur aufweist, und dass die Regel-/Auswerteeinheit das Über- oder Unterschreiten des vorgegebenen Grenzwertes an Hand der ermittelten Temperatur und dem dieser Temperatur zugeordneten Schwellwert überwacht.

Die Erfindung wird anhand der nachfolgenden Figuren näher erläutert.
- Fig. 1: zeigt eine Vorrichtung zur Überwachung eines Füllstands in einem Behälter;
- Fig. 2: zeigt ein Blockschaltbild der Vorrichtung.

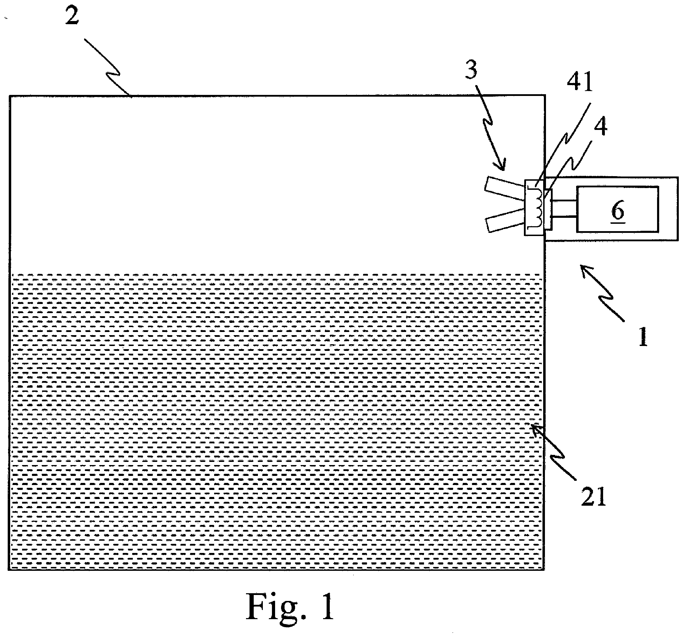

In Fig. 1 ist eine Vorrichtung 1 zur Bestimmung und/oder Überwachung eines vorbestimmten Füllstands, der Dichte oder der Viskosität eines Mediums 21 in einem Behälter 2 dargestellt. Die schwingfähige Einheit 3 wird von zwei Schwingstäben gebildet, welche über eine Membran miteinander gekoppelt und zu mechanischen Schwingungen anregbar sind. Die Membran verschließt endseitig ein rohförmiges Gehäuse, welches derart an dem Behälter 2 angebracht ist, dass sich die schwingfähige Einheit 3 auf einer Höhe befindet, welche dem zu überwachenden Füllstand entspricht. In dem Gehäuse befindet sich eine induktive Wandlereinheit 4 mit einer Spule 41 und einem Magneten, über welche die schwingfähige Einheit 3 zu Schwingungen anregbar und Schwingungen von der schwingfähigen Einheit 3 in Form eines elektrischen Signals empfangbar sind. Die Spule 41 und der Magnet sind hierbei derart an in das Gehäuseinnere hineinragenden Fortsätzen der Schwingstäbe angeordnet, dass die beiden Schwingstäbe mittels der Wandlereinheit 4 zu gegensinnigen Bewegungen senkrecht zu ihrer Längsachse anregbar sind. Die Regelung oder Steuerung der Schwingungsanregung, sowie die Auswertung der Schwingungen erfolgt mittels einer Elektronikeinheit, welche sowohl analoge als auch digitale Komponenten umfasst.

Die schwingfähige Einheit 3 wird in der Regel zu resonanten Schwingungen angeregt. In der Elektronikeinheit befindet sich mindestens eine Regel-/Auswerteeinheit 6, beispielsweise in Form eines Mikrocontrollers oder eines FPGAs (Field Programmable Gate Array). Die Regel-/Auswerteeinheit 6 wertet das elektrische Empfangssignal in Bezug auf die zu bestimmende Prozessgröße aus. Beispielsweise vergleicht die Regel-/Auswerteeinheit 6 zur Füllstandsbestimmung die Schwingfrequenz mit einer vorgegebenen Grenzfrequenz. Liegt die Schwingfrequenz unterhalb der Grenzfrequenz, ist die schwingfähige Einheit 3 mit Medium 21 bedeckt; liegt sie darüber, schwingt die schwingfähige Einheit 3 frei.

Die Erfindung wird am Beispiel der Schwinggabel erläutert, ist jedoch ebenso bei Messgeräten mit einer anders ausgestalteten schwingfähigen Einheit 3, beispielsweise in Form eines Schwingstabes einsetzbar.

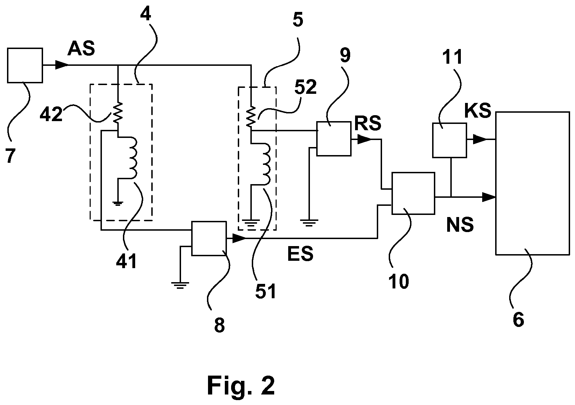

Fig. 2 zeigt ein Blockschaltbild einer erfindungsgemäßen Vorrichtung. Ein Signalgenerator 7 erzeugt eine elektrische Wechselspannung in Form einer Rechteckspannung. Dieses Anregungssignal AS ist der elektrodynamischen Wandlereinheit 4 und dem Referenzelement 5 zugeführt. Die Frequenz des Anregungssignals AS ist vorzugsweise derart gewählt, dass eine vorgegebene Phasenverschiebung zwischen dem Anregungssignal AS und dem Empfangssignal ES der Wandlereinheit 4 besteht. In der Regel beträgt die Phasenverschiebung 90° zur Anregung resonanter Schwingungen. Die elektrodynamische Wandlereinheit 4 weist genau eine Spule 41 auf, welche zum Anregen der schwingfähigen Einheit 3 zu mechanischen Schwingungen und gleichermaßen auch zum Empfangen der Schwingungen dient. Das Referenzelement 5 weist ebenfalls eine Spule 41 auf, welche hier mit Referenzspule 51 benannt ist. Spule 41 und Referenzspule 51 sind jeweils über einen Widerstand 42, 52 mit dem Anregungssignal beaufschlagt. Das Referenzelement 5 bildet das Verhalten der Wandlereinheit 4 bei Beaufschlagung mit dem Anregungssignal AS nach, ohne von den Schwingungen der schwingfähigen Einheit 3 beeinflusst zu sein. Das Referenzelement 5 kann neben den dargestellten elektrischen Bauteilen noch weitere Bauteile aufweisen. Beispielsweise können weiterhin ein Kondensator und ein Widerstand vorhanden sein, um das Übertragungsverhalten der Referenzspule 51 noch besser an das der Spule 41 anzupassen.

Das Antwortsignal der Spule 41 der Wandlereinheit 4 besteht aus einem schwingungsabhängigen Nutzsignal und einem Störsignal, welches aus Umladeströmen resultiert, die durch das Anregungssignal hervorgerufen werden. Dieses Empfangssignal ES liegt am Ausgang der ersten Spannungserfassungseinrichtung 8 an. Das Antwortsignal der Referenzspule 51 enthält keinen schwingungsabhängigen Anteil und besteht nur aus dem durch die Umladeströme hervorgerufenen Störsignal. Dieses Referenzsignal RS liegt am Ausgang der zweiten Spannungserfassungseinrichtung 9 an. Empfangssignal ES und Referenzsignal RS sind einem Differenzverstärker 10 zugeführt. Der Differenzverstärker extrahiert das Nutzsignal NS aus dem Empfangssignal ES. Sind die Zeitkonstanten des mit der Spule 41 der Wandlereinheit 4 gebildeten RL-Glieds und des Referenzelements 5 gleich, kompensieren sich die Störsignale im Referenzsignal RS und im Empfangssignal ES und das Ausgangssignal des Differenzverstärkers 10 entspricht dem reinen Nutzsignal NS.

In einer vorteilhaften Ausgestaltung handelt es sich bei dem ersten Widerstand 52, welcher zu der Referenzspule 51 in Reihe geschaltet ist, um einen einstellbaren Widerstand, beispielsweise in Form eines Digitalpotentiometers. Hierdurch wird eine Temperaturkompensation ermöglicht. Bei der Referenztemperatur unterscheiden sich die Störsignale im Empfangssignal ES und im Referenzsignal RS auf Grund der identischen Zeitkonstanten nicht. Die Induktivität der Spule 41 zeigt jedoch eine Temperaturabhängigkeit auf. Diese Abhängigkeit bewirkt eine temperaturabhängige Zeitkonstante des aus der Spule 41 und dem zweiten Widerstand 42 gebildeten RL-Glieds und äußert sich in einer Veränderung des im Empfangssignal ES enthaltenen Störsignals. Die Induktivität der Referenzspule 51 ist ebenfalls temperaturabhängig. Da am Ort der Referenzspule 51 jedoch eine andere Temperatur als am Ort der Spule 41 der Wandlereinheit 4 herrschen kann oder auch die Zeitkonstanten des Referenzelements 5 und der Wandlereinheit 4 eine unterschiedliche Temperaturabhängigkeit aufweisen können, können die Störsignale im Empfangssignal ES und im Referenzsignal RS eine unterschiedliche Gestalt annehmen. In Folge dessen wird das Störsignal im Empfangssignal ES bei der Differenzbildung nicht mehr kompensiert und ein zusätzliches Störsignal KS ist im Nutzsignal NS enthalten. Das Störsignal KS kann zu einer verminderten Messgenauigkeit führen.

Mittels des einstellbaren ersten Widerstands 52 ist eine Kompensation des im Nutzsignal NS auftretenden Störsignals KS ermöglicht. Die Zeitkonstante des Referenzelements 5 ist durch den variablen ersten Widerstand 52 derart aktiv regelbar, dass die Zeitkonstante des Referenzelements 5 permanent an diejenige der Wandlereinheit 4 angepasst ist.

Das Nutzsignal NS ist einem Notch-Filter 11 zugeführt, welches das eigentliche schwingungsabhängige Nutzsignal und das zusätzliche Störsignal KS voneinander trennt. Hierzu ist die von dem Notch-Filter 11 gesperrte Frequenz auf die Frequenz des schwingungsabhängigen Nutzsignals bzw. die Anregungsfrequenz eingestellt. Vorzugsweise ist das Notch-Filter 11 nachführbar, sodass auch bei veränderlicher Anregungsfrequenz stets die entsprechende Frequenz herausfilterbar ist. An Stelle des Notch-Filters 11 ist beispielsweise auch ein Hochpass-Filter einsetzbar. Die Regel-/Auswerteeinheit 6 regelt den Wert des ersten Widerstands 52 derart, dass das im Nutzsignal NS enthaltene Störsignal KS eine minimale Amplitude aufweist. In diesem Zustand ist die Zeitkonstante des Referenzelements 5 optimal an diejenige der Wandlereinheit 4 angepasst.

Vorteilhaft weist die Regel-/Auswerteeinheit 6 eine Abtastvorrichtung auf, welche das Störsignal KS zu vorbestimmten Abtastzeitpunkten abtastet. Die Abtastzeitpunkte entsprechen vorzugsweise den Zeitpunkten, zu welchen das Anregungssignal Extrema aufweist. Bei vollständiger Kompensation des Störsignals im Empfangssignal ES mit Hilfe des Referenzsignals RS ist die Amplitude des Störsignals KS im Nutzsignal zu diesen Zeitpunkten Null. Bei einer von Null verschiedenen Amplitude vergleicht eine Logikeinheit der Abtastvorrichtung das Vorzeichen des abgetasteten Werts mit dem Vorzeichen des Anregungssignals zu diesem Zeitpunkt und ermittelt an Hand des Vergleichs eine Richtung, in welche der Wert des ersten Widerstands 52 nachzuregeln ist. An Hand der abgetasteten Amplitude ermittelt die Logikeinheit entsprechend den Betrag, um welchen der Wert nachzuregeln ist.

Vorzugsweise ist weiterhin auch die Größe des zweiten Widerstands 42, welcher zu der Spule 41 der Wandlereinheit 4 in Reihe geschaltet ist, einstellbar. Beispielsweise handelt es sich bei dem zweiten Widerstand 42 ebenfalls um ein Digitalpotentiometer. Die Einstellung des zweiten Widerstands 42 erfolgt jedoch einmalig und wird im Messbetrieb nicht verändert. Die Größe des zweiten Widerstands 42 ist hierbei derart eingestellt, dass das aus zweitem Widerstand 42 und Spule 41 gebildete RL-Glied bei einer vorgegebenen Referenztemperatur eine vorgegebene Zeitkonstante aufweist. Die Induktivität der Referenzspule 51 und der Widerstandswert des ersten Widerstands 52 sind derart gewählt bzw. eingestellt, dass das Referenzelement 5 bei der Referenztemperatur die gleiche Zeitkonstante besitzt. Durch den einstellbaren Widerstandswert des zweiten Widerstands 42 ist der Wert der Zeitkonstante der Wandlereinheit 4 auf einen vorgegebenen Wert einstellbar und Schwankungen auf Grund von Varianzen der verwendeten Bauteile können softwaretechnisch ausgeglichen werden. Dies stellt insbesondere bei der Fertigung einen großen Vorteil dar, da für verschiedene baugleiche Messgeräte 1 jeweils die gleiche Zeitkonstante vorgebbar ist. Das Referenzelement 5 ist dann an die vorgegebene Zeitkonstante anpassbar und muss nicht für jedes Messgerät 1 unterschiedlich angepasst werden. Hierdurch kann der Wertebereich des einstellbaren ersten Widerstands 52 optimal ausgenutzt werden. Ein weiterer vorteilhafter Effekt der einstellbaren Ausgestaltung von erstem und zweitem Widerstand 42, 52 besteht darin, dass in dem Messzweig mit der Wandlereinheit 4 und in dem Referenzzweig mit dem Referenzelement 5 die gleichen parasitären Effekte auftreten, sodass sich diese Effekte bei der Erzeugung des Nutzsignals NS mittels des Differenzverstärkers 10 idealerweise vollständig kompensieren.

Die Ausgestaltung des Referenzelements 5 mit einem einstellbaren ersten Widerstand 52 bietet neben der Temperaturkompensation auch die Möglichkeit der Erfassung der Temperatur der Spule 41. Die Kenntnis der Temperatur ist zur Erhöhung der Messgenauigkeit der Vorrichtung vorteilhaft. Beispielsweise ändert sich die Steifigkeit der schwingfähigen Einheit 3 und hiermit auch die zur Bestimmung der Prozessgrößen auswertbaren Schwingungseigenschaften Resonanzfrequenz, Schwingungsamplitude und Phasenverschiebung zwischen Anregungssignal und Empfangssignal mit der Temperatur. Die Temperaturabhängigkeit der Schwingungseigenschaften führt daher zu einer temperaturabhängigen Messgenauigkeit der Vorrichtung. Bei Kenntnis der Temperatur können beispielsweise eine Temperaturabhängigkeit der Prozessgröße oder einer von der Prozessgröße abhängigen Schwingungseigenschaft kompensiert oder ein für die Überwachung der Prozessgröße festgelegter Grenzwert angepasst werden. Beispielsweise wird die Grenzfrequenz, mit welcher die aktuelle Schwingfrequenz bei der Füllstandsüberwachung verglichen wird, an die Temperatur angepasst. Es können verschiedenen Temperaturen zugeordnete Grenzwerte in Form einer Tabelle hinterlegt sein, oder die Anpassung erfolgt mittels einer Formel.

Die Temperatur der Spule 41 ist an Hand des mittels des Notch-Filters 11 extrahierten Störsignals KS ermittelbar. Je höher die Amplitude des Störsignals KS ist, desto größer ist die Temperaturänderung gegenüber der Referenztemperatur. Auf Grund der ständigen Nachregelung des Widerstandswerts des ersten Widerstands 52 ist die Amplitude des Störsignals KS jedoch kein gutes Maß für die Temperatur. Jedoch steht der Widerstandswert des ersten Widerstands 52 mit der Temperatur am Ort der Spule 41 in eindeutigem Zusammenhang, sodass eine Temperaturbestimmung an Hand des Widerstandswerts möglich ist. Zur Temperaturbestimmung ist vorzugsweise eine Kennlinie in der Regel-/Auswerteeinheit 6 hinterlegt, welche die Temperaturabhängigkeit des Widerstandswerts des ersten Widerstands 52 angibt.

Es ist ebenfalls möglich, zur Temperaturmessung ein Hilfssignal zu verwenden, welches im Gegensatz zu dem Anregungssignal zur Bestimmung der Prozessgröße außerhalb des Resonanzbereichs um die Resonanzfrequenz der schwingfähigen Einheit 3 liegt. Am Ausgang des Differenzverstärkers 10 liegt dann nur das temperaturabhängige Störsignal an.

Die Induktivität der Referenzspule 51 kann je nach Wahl der Spule wie die Spule 41 der Wandlereinheit 4 selbst eine mehr oder weniger starke Temperaturabhängigkeit aufweisen. In diesem Fall ist an Hand des Störsignals KS im Nutzsignal NS nur die Temperaturdifferenz zwischen Spule 41 und Referenzspule 51 bestimmbar. Zur Bestimmung der Temperatur am Ort der Spule 41 ist ein Temperatursensor benachbart zu der Referenzspule 51 angeordnet. An Hand der Temperatur der Referenzspule 51 und der gemessenen Temperaturdifferenz ist somit die Temperatur am Ort der Spule 41 bestimmbar.

### Bezugszeichenliste

- 1: Messgerät
- 2: Behälter
- 21: Medium
- 3: Schwingfähige Einheit
- 4: Wandlereinheit
- 41: Spule
- 42: Zweiter Widerstand
- 5: Referenzelement
- 51: Referenzspule
- 52: Erster Widerstand
- 6: Regel-/Auswerteeinheit
- 7: Signalerzeugungseinheit
- 8: Spannungserfassungseinrichtung
- 9: Spannungserfassungseinrichtung
- 10: Differenzverstärker
- 11: Notch-Filter

## Patentansprüche

1. Vorrichtung (1) zur Bestimmung und/oder Überwachung mindestens einer Prozessgröße eines Mediums (21) in einem Behälter (2), mit
- einer mechanisch schwingfähigen Einheit (3),
- einer elektrodynamischen Wandlereinheit (4) zum Anregen der schwingfähigen Einheit (3) zu mechanischen Schwingungen mittels eines Anregungssignals (AS) und zum Empfangen der mechanischen Schwingungen der schwingfähigen Einheit (3) und Umwandeln in ein elektrisches Empfangssignal (ES),
wobei die elektrodynamische Wandlereinheit (4) eine Spule (41) aufweist, welche sowohl als Antriebselement als auch als Empfangselement dient,
- und mit einer Elektronikeinheit, welche zumindest aus dem Empfangssignal (ES) die Prozessgröße bestimmt und/oder überwacht
**dadurch gekennzeichnet,**
**dass** die Vorrichtung (1) ein Referenzelement (5) mit mindestens einer Referenzspule (51) aufweist, wobei das Referenzelement (5) parallel zu der elektrodynamischen Wandlereinheit (4) geschaltet und mit dem gleichen Anregungssignal (AS) beaufschlagt ist, und wobei das Referenzelement (5) ein von den Schwingungen der schwingfähigen Einheit (3) unbeeinflusstes Referenzsignal (RS) erzeugt,
**dass** die Elektronikeinheit aus dem Empfangssignal (ES) und dem Referenzsignal (RS) ein Nutzsignal (NS) extrahiert und anhand des Nutzsignals (NS) die Prozessgröße bestimmt und/oder überwacht, wobei das Nutzsignal (NS) ein aus dem Nutzsignal (NS) extrahierbares Störsignal (KS) enthält, welches aus der Temperaturabhängigkeit der Induktivität der Spule (41) resultiert, und
**dass** die Elektronikeinheit eine Regel-/Auswerteeinheit (6) aufweist, welche anhand des Störsignals (KS) die Temperatur der Spule (41) bestimmt.

2. Vorrichtung nach Anspruch 1,
**dadurch gekennzeichnet,**
**dass** das Referenzelement (5) ein erstes Bauelement (52) elektrisch einstellbarer Größe aufweist, welches elektrisch in Reihe zu der Referenzspule (51) geschaltet ist.

3. Vorrichtung nach einem der vorangehenden Ansprüche,
**dadurch gekennzeichnet,**
**dass** die Wandlereinheit (4) ein zweites Bauelement (42) elektrisch einstellbarer Größe aufweist, welches elektrisch in Reihe zu der Spule (41) geschaltet ist.

4. Vorrichtung nach Anspruch 2 oder 3,
**dadurch gekennzeichnet,**
**dass** es sich bei dem ersten Bauelement (42) und/oder dem zweiten Bauelement (52) um einen einstellbaren Widerstand, insbesondere ein Digitalpotentiometer, handelt.

5. Vorrichtung nach einem der vorangehenden Ansprüche,
**dadurch gekennzeichnet,**
**dass** die Größe des zweiten Bauelements (42) derart einstellbar ist, dass die Wandlereinheit (4) eine vorgebbare Zeitkonstante aufweist.

6. Vorrichtung nach Anspruch 1,
**dadurch gekennzeichnet,**
**dass** die Regel-/Auswerteeinheit (6) die Größe des ersten Bauelements (52) auf den Wert regelt, bei dem ein Betrag des Störsignals (KS) in dem aus dem Empfangssignal (ES) und dem Referenzsignal (RS) extrahierten Nutzsignal (NS) minimal ist.

7. Vorrichtung nach Anspruch 1,
**dadurch gekennzeichnet,**
**dass** ein Temperatursensor (7) vorgesehen ist, welcher die Temperatur am Ort des Referenzelements (5) bestimmt,
**dass** die Regel-/Auswerteeinheit (6) aus dem in dem Nutzsignal (NS) enthaltenen Störsignal (KS) die Temperaturdifferenz zwischen der Spule (41) und dem Referenzelement (5) bestimmt,
und
**dass** die Regel-/Auswerteeinheit (6) anhand der Temperatur am Ort des Referenzelements (5) und der Temperaturdifferenz die Temperatur der Spule (41) bestimmt.

8. Vorrichtung nach einem der vorangehenden Ansprüche,
**dadurch gekennzeichnet,**
**dass** die Vorrichtung (1) ein Über- oder Unterschreiten eines vorgegebenen Grenzwertes der Prozessgröße überwacht,
**dass** in der Regel-/Auswerteeinheit (6) für einen vorgegebenen Temperaturbereich, in welchem die Vorrichtung (1) einsetzbar ist, Schwellwerte für eine von der Prozessgröße abhängige Schwingungseigenschaft abgelegt sind, die die Schwingungseigenschaft beim Erreichen des Grenzwertes bei der jeweiligen Temperatur aufweist,
und
**dass** die Regel-/Auswerteeinheit (6) das Über- oder Unterschreiten des vorgegebenen Grenzwertes anhand der ermittelten Temperatur und dem dieser Temperatur zugeordneten Schwellwert überwacht.

## Claims

1. Apparatus (1) designed to determine and/or monitor at least a process variable of a medium (21) in a vessel (2), with
- a unit capable of vibrating mechanically (3),
- an electrodynamic transducer unit (4) designed to excite the unit capable of vibrating (3) to perform mechanical vibrations by means of an excitation signal (AS) and designed to receive the mechanical vibrations of the unit capable of vibrating (3) and to convert them to an electrical reception signal (ES),
wherein the electrodynamic transducer unit (4) comprises a coil (41), which serves as both a drive element and a reception element,
- and with an electronic unit, which determines and/or monitors the process variable at least from the reception signal (ES)
**characterized in that**
the apparatus (1) has a reference element (5) with at least a reference coil (51), wherein the reference element (5) is switched in parallel to the electrodynamic transducer unit (4) and is subject to the same excitation signal (AS), and wherein the reference element (5) generates a reference signal (RS) that is not affected by the vibrations of the unit capable of vibrating (3),
**in that** the electronic unit extracts a wanted signal (NS) from the reception signal (ES) and from the reference signal (RS) and determines and/or monitors the process variable on the basis of the wanted signal (NS), wherein the wanted signal (NS) contains an interference signal (KS) that can be extracted from the wanted signal (NS) and results from the temperature dependence of the inductance of the coil (41), and
**in that** the electronic unit has a control/evaluation unit (6) which determines the temperature of the coil (41) on the basis of the interference signal (KS).

2. Apparatus as claimed in Claim 1,
**characterized in that**
the reference element (5) comprises a first component (52) of an electrically adjustable size, wherein said component is switched electrically in series with the reference coil (51).

3. Apparatus as claimed in one of the previous claims,
**characterized in that**
the transducer unit (4) comprises a second component (42) of an electrically adjustable size, wherein said component is switched electrically in series with the coil (41).

4. Apparatus as claimed in Claim 2 or 3,
**characterized in that**
the first component (42) and/or the second component (52) is/are an adjustable resistor, particularly a digital potentiometer.

5. Apparatus as claimed in one of the previous claims,
**characterized in that**
the size of the second component (42) can be adjusted in such a way that the transducer unit (4) has a predefinable time constant.

6. Apparatus as claimed in Claim 1,
**characterized in that**
the control/evaluation unit (6) regulates the size of the first component (52) to the value at which a value of the interference signal (KS) contained in the wanted signal (NS) extracted from the reception signal (ES) and the reference signal (RS) is minimal.

7. Apparatus as claimed in Claim 1,
**characterized in that**
a temperature sensor (7) is provided that determines the temperature at the place of the reference element (5),
**in that** the control/evaluation unit (6) determines the temperature difference between the coil (41) and the reference element (5) from an interference signal (KS) contained in the wanted signal (NS), and
**in that** the control/evaluation unit (6) determines the temperature of the coil (41) on the basis of the temperature at the place of the reference element (5) and the temperature difference.

8. Apparatus as claimed in one of the previous claims,
**characterized in that**
the apparatus (1) monitors the overshooting or undershooting of a predefined limit value of the process variable,
threshold values for a vibration characteristic that depends on the process variable are saved in the control/evaluation unit (6) for a predefined temperature range in which the apparatus (1) can be utilized, wherein said threshold values present the vibration characteristic when the limit value is reached at the specific temperature, and wherein the control/evaluation unit (6) monitors the overshooting or undershooting of the predefined limit value on the basis of the determined temperature and the threshold value assigned to this temperature.

## Revendications

1. Dispositif (1) destiné à la détermination et/ou à la surveillance d'au moins une grandeur de process d'un produit (21) dans un réservoir (2), avec
- une unité apte à vibrer mécaniquement (3),
- une unité de transducteur électrodynamique (4) destinée à exciter l'unité apte à vibrer (3) en vibrations mécaniques au moyen d'un signal d'excitation (AS) et destinée à recevoir les vibrations mécaniques de l'unité apte à vibrer (3) et à les convertir en un signal de réception électrique (ES),
l'unité de transducteur électrodynamique (4) comprenant une bobine (41), laquelle sert à la fois d'élément d'entraînement et d'élément de réception,
- et avec une unité électronique, laquelle détermine et/ou surveille la grandeur de process au moins à partir du signal de réception (ES)
**caractérisé**
**en ce que** le dispositif (1) présente un élément de référence (5) avec au moins une bobine de référence (51), l'élément de référence (5) étant monté en parallèle avec l'unité de transducteur électrodynamique (4) et étant soumis au même signal d'excitation (AS), et l'élément de référence (5) générant un signal de référence (RS) qui n'est pas influencé par les vibrations de l'unité apte à vibrer (3),
**en ce que** l'unité électronique extrait un signal utile (NS) du signal de réception (ES) et du signal de référence (RS) et détermine et/ou surveille la grandeur de process sur la base du signal utile (NS), le signal utile (NS) contenant un signal parasite (KS) pouvant être extrait du signal utile (NS) et résultant de la dépendance de la température de l'inductance de la bobine (41), et
**en ce que** l'unité électronique présente une unité de régulation / d'exploitation (6) qui détermine la température de la bobine (41) sur la base du signal parasite (KS).

2. Dispositif selon la revendication 1,
**caractérisé**
**en ce que** l'élément de référence (5) comprend un premier composant (52) de taille électriquement réglable, lequel composant est électriquement couplé en série avec la bobine de référence (51).

3. Dispositif selon l'une des revendications précédentes,
**caractérisé**
**en ce que** l'unité de transducteur (4) comprend un deuxième composant (42) de taille électriquement réglable, lequel composant est électriquement couplé en série avec la bobine (41).

4. Dispositif selon la revendication 2 ou 3,
**caractérisé**
**en ce que** le premier composant (42) et/ou le deuxième composant (52) est une résistance réglable, notamment un potentiomètre numérique.

5. Dispositif selon l'une des revendications précédentes,
**caractérisé**
**en ce que** la taille du deuxième composant (42) est réglable de telle sorte que l'unité de transducteur (4) présente une constante de temps prédéfinissable.

6. Dispositif selon la revendication 1,
**caractérisé**
**en ce que** l'unité de régulation / d'exploitation (6) régule la taille du premier composant (52) à la valeur à laquelle une quantité du signal parasite (KS) contenu dans le signal utile (NS) extrait du signal de réception (ES) et du signal de référence (RS) est minimale.

7. Dispositif selon la revendication 1,
**caractérisé**
**en ce qu'**il est prévu un capteur de température (7), lequel détermine la température à l'emplacement de l'élément de référence (5),
**en ce que** l'unité de régulation / d'exploitation (6) détermine la différence de température entre la bobine (41) et l'élément de référence (5) à partir du signal parasite (KS) contenu dans le signal utile (NS), et
**en ce que** l'unité de régulation / d'exploitation (6) détermine la température de la bobine (41) sur la base de la température à l'emplacement de l'élément de référence (5) et de la différence de température.

8. Dispositif selon l'une des revendications précédentes,
**caractérisé**
**en ce que** le dispositif (1) surveille un dépassement par excès ou par défaut d'une valeur limite prédéfinie de la grandeur de process,
**en ce que** des valeurs de seuil pour une caractéristique de vibration dépendant de la grandeur de process sont mémorisées dans l'unité de régulation / d'exploitation (6) pour une gamme de température prédéfinie, gamme dans laquelle le dispositif (1) peut être utilisé, valeurs de seuil que présente la caractéristique de vibration lorsque la valeur limite est atteinte à la température respective, et
**en ce que** l'unité de régulation / d'exploitation (6) surveille le dépassement par excès ou par défaut de la valeur limite prédéfinie sur la base de la température déterminée et de la valeur de seuil associée à cette température.
